# EUROPEAN PATENT APPLICATION

(11) **EP 4 534 184 A2**
(43) Date of publication of application: **09.04.2025**
(21) Application number: 24201631.9
(22) Date of filing: 20.09.2024
(51) Int. Cl.: B01D 61/08, B01D 63/10, B01D 65/08

(54) **FILTER STRUCTURE**

(30) Priority: 06.10.2023 KR 20230133179
(71) Applicant: Coway Co., Ltd., Gongju-si, Chungcheongnam-do 32508 (KR)
(72) Inventor: RYU, Geun Sang, Gongju-si 32508 (KR); EOM, Ju Hyuk, Gongju-si 32508 (KR); CHO, Sung Kon, Gongju-si 32508 (KR); LEE, Guk Won, Gongju-si 32508 (KR); YUN, Sung Han, Gongju-si 32508 (KR)
(74) Representative: Vossius & Partner Patentanwälte Rechtsanwälte mbB

(57) **Abstract**

A filter structure is disclosed. A filter structure according to an aspect of the present disclosure may include a plurality of membranes configured to selectively pass raw water through to produce purified water; a spacer disposed between the plurality of membranes configured to form a space through which the purified water flows; a tube configured to be connected to the space and the outside to form a flow path through which the purified water flows out, the plurality of membranes and the spacer being wound around the tube; and a seal assembly configured to extend along an outer perimeter of the plurality of membranes and seal the space in the outer circumferential direction, the seal assembly having a hardness different from that of the plurality of membranes.

## Description

### TECHNICAL FIELD

The present invention relates to a filter structure, and more particularly, to a filter structure having a structure in which the adhesion between each surface is minimized to enhance the cleaning effect.

### BACKGROUND OF THE INVENTION

A water purifier is an apparatus that filters raw water to produce purified water suitable for drinking. As quality of life improves and interest in health increases, water purifiers are becoming more common not only in business establishments but also in living spaces such as homes.

A water purifier includes a filter to filter out foreign substances or the like contained in raw water. The filter may be configured to filter out foreign substances or the like contained in raw water by physical or chemical methods.

For example, there is a reverse osmosis (R/O) type filter that inversely utilizes an osmotic pressure phenomenon. A reverse osmosis type filter is configured to filter raw water from a high concentration of foreign substances or the like to a low concentration, thereby producing purified water. In general, reverse osmosis type filters can filter raw water introduced from one side of the radially outer or inner side by passing it through a membrane of the filter while flowing it to the other side.

As the filtering process of the raw water continues, foreign substances or the like separated from the raw water stay on any one side of the radially outer or inner side of the filter. If foreign substances or the like stay excessively, there is a concern that the membrane is blocked and thus the filtration efficiency of the filter may be reduced.

Therefore, the filter is cleaned periodically or as needed when using the water purifier. The cleaning of the filter may be performed in a form in which foreign substances or the like adsorbed on the membrane without passing through the membrane are washed with a fluid such as raw water.

Meanwhile, the filtration efficiency of raw water may depend on the number of membranes that pass through before the raw water is generated as purified water and discharged to the outside. That is, the more membranes the raw water passes through, the more effectively foreign substances or the like contained in the raw water can be removed. To this end, the membrane is used in a wound state rather than an unfolded state, so that the introduced raw water is filtered by passing through as many membranes as possible.

However, due to the material properties of the above membranes, adsorption may occur between the membranes that are arranged adjacent to each other along the radial direction. In this case, the space between the membranes disappears, making it difficult to secure a flow path through which a fluid for cleaning to pass. Accordingly, it is difficult to effectively remove foreign substances or the like remaining in the membrane filter, and as a result, there is a concern that the filtration efficiency of the filter may decrease and its service life may be reduced.

Korean Patent Laid-Open Publication No. 1 0-2022-0005860 discloses a filter and a method for producing the same. Specifically, it discloses a filter and a method for producing the same, which can prevent damage to internal components during assembly by arranging a flow path adapter and an outlet pipe coupled thereto between a pair of membranes.

However, a filter and a method for producing the same disclosed in the above prior art document only disclose a method for preventing damage to components. That is, the above prior art document does not provide a method for improving cleaning efficiency by preventing adsorption between the surfaces of the membranes when a pair of membranes are rolled.

Korean Patent Registration No. 1 0-1403722 discloses a membrane filter for a water purifier equipped with a nanoporous membrane pocket. Specifically, it discloses a membrane filter for a water purifier capable of improving sterilizing performance and durability by mounting a nanoporous membrane pocket surrounding the outer surface of the water purifier filter.

However, the membrane filter for a water purifier disclosed in the above prior art document is configured so that the nanoporous membrane pockets surround the entire filter. Therefore, the membrane filter for a water purifier according to the above prior art document inevitably involves an increase in volume.

Furthermore, the above prior art document does not provide a method for improving cleaning efficiency by preventing adsorption between the surfaces of the nanoporous membrane when the nanoporous membrane for filtering raw water is rolled.

### [Related Art Document]

### [Patent Document]

Korean Patent Laid-Open Publication No. 10-2022-0005860 (2022. 01. 14.)
Korean Patent Registration No. 1 0-1403722 (2014. 06. 03.)

### SUMMARY OF THE INVENTION

### Technical Problem

The present invention is to solve the above problems, and the present invention is directed to providing a filter structure having a structure in which a cleaning effect can be improved.

The present invention is also directed to providing a filter structure having a structure in which adsorption between components for filtering raw water can be minimized.

The present invention is also directed to providing a filter structure having a structure in which a flow path of a fluid for cleaning can be reliably secured.

The present invention is also directed to providing a filter structure having a structure in which the manufacturing process is simple.

The present invention is also directed to providing a filter structure having a structure in which a coupling state between components for discharging purified water and components for producing purified water can be stably maintained.

The present invention is also directed to providing a filter structure having a structure in which the degree of freedom of arrangement of components for discharging purified water can be improved.

The present invention is also directed to providing a filter structure having a structure in which raw water can flow and be filtered throughout the components for filtering raw water.

The problems of the present invention are not limited to those mentioned above, and other problems not mentioned will be clearly understood by those of ordinary skill in the art from the following description.

### Technical Solution

According to an aspect of the present invention, provided is a filter structure including a plurality of membranes configured to selectively pass raw water through to produce purified water; a spacer disposed between the plurality of membranes configured to form a space through which the purified water flows; a tube configured to be connected to the space and the outside to form a flow path through which the purified water flows out, the plurality of membranes and the spacer being wound around the tube; and a seal assembly configured to extend along an outer perimeter of the plurality of membranes and seal the space in the outer circumferential direction, the seal assembly having a hardness different from that of the plurality of membranes , wherein the plurality of membranes wound around the tube member are arranged at least partially spaced apart along the radial direction.

In this case, a filter structure may be provided in which the height of the plurality of membranes is same as that of the tube in the longitudinal direction , and wherein the distance between portions arranged overlapping in the radial direction among the portions of the plurality of membranes wound around the tube has at least two or more values different from each other in the height direction.

In addition, a filter structure may be provided in which the hardness of the plurality of membranes is less than or equal to that of the seal assembly, and wherein the distance in the radial direction between outer perimeters of the plurality of membranes wound around the tube is greater than or equal to that of the remaining portions of the plurality of membranes.

In this case, a filter structure may be provided in which a cleaning space in which cleaning water configured to remove foreign substances remaining on the surface of the membrane flows in the longitudinal direction of the tube is formed between the plurality of membranes wound around the tube.

In addition, a filter structure may be provided in which the length of the cleaning space in the radial direction has at least two values different from each other in the longitudinal direction of the tube.

In this case, a filter structure may be provided in which the seal assembly is formed by thermal staking outer perimeters of the plurality of membranes.

In addition, a filter structure may be provided in which the seal assembly is formed by being bonded by polyurethane sealant.

In this case, a filter structure may be provided further including a coupler configured to be positioned between the plurality of membranes and support the tube to couple the tube with the plurality of membranes.

In addition, a filter structure may be provided in which the cross-section of the coupler is configured to decrease as the coupler moves away from the tube along the outer perimeter of the plurality of membranes.

In this case, a filter structure may be provided in which the cross-section of the coupler is configured to extend in the outer circumferential direction of the membranes, and wherein an angle between a pair of sides facing away in the thickness direction of the membrane includes an acute angle.

In addition, a filter structure may be provided in which the cross-section of the coupler is formed such that an angle of one pair of edges spaced apart from each other in the outer circumferential direction of the membrane is less than or equal to that in the thickness direction of the membrane.

In this case, a filter structure may be provided in which a plurality of said spacers are provided, and the plurality of spacers are positioned between the plurality of membranes, and wherein the filter structure further comprises an adapter configured to be coupled to the membrane, the spacer, and the tube, respectively, to be configured to connect the tube to the space between the plurality of spacers.

In addition, a filter structure may be provided in which the adapter comprises: an adapter body configured to penetrate the membrane and the spacer and be coupled to the tube ; and an adapter base configured to be coupled to the adapter body and be positioned in the space to support the adapter body, wherein the adapter base has a larger cross-section than the adapter body.

In this case, a filter structure may be provided in which the tube comprises: a tube body configured to extend in one direction and have a tube hollow inside that communicates with the space; and a tube opening configured to be formed through the outer surface of the tube body and connect the adapter body and the tube hollow.

In addition, a filter structure may be provided in which the tube extends in one direction, and wherein a plurality of said adapters are provided, and the plurality of adapters are disposed to be spaced apart from each other along the extension direction of the tube. a filter structure, including a plurality of membrane members that selectively pass raw water through to produce purified water; a spacer member disposed between the plurality of membrane members to form a space through which the produced purified water flows; a tube member fluidly connected to the space and the outside to form a flow path through which the produced purified water flows out, and in which the plurality of membrane members and the spacer member are wound; and a sealing portion extending along an outer perimeter of the plurality of membrane members to seal the space in the outer perimeter direction and formed to have a hardness different from that of the plurality of membrane members, wherein the plurality of membrane members wound around the tube member are arranged at least partially spaced apart along the radial direction.

### Advantageous Effects

According to the above configuration, the filter structure according to an exemplary embodiment of the present invention can have an improved cleaning effect.

In addition, according to the above configuration, in the filter structure according to an exemplary embodiment of the present invention, adsorption between components for filtering raw water can be minimized.

In addition, according to the above configuration, in the filter structure according to an exemplary embodiment of the present invention, a flow path of a fluid for cleaning can be reliably secured.

In addition, according to the above configuration, in the filter structure according to an exemplary embodiment of the present invention, the manufacturing process can be simple.

In addition, according to the above configuration, in the filter structure according to an exemplary embodiment of the present invention, a coupling state between components for discharging purified water and components for producing purified water can be stably maintained.

In addition, according to the above configuration, in the filter structure according to an exemplary embodiment of the present invention, the degree of freedom of arrangement of components for discharging purified water can be improved.

In addition, according to the above configuration, in the filter structure according to an exemplary embodiment of the present invention, raw water can flow and be filtered throughout the components for filtering raw water.

Advantageous effects of the present invention are not limited to the above-described effects, and should be understood to include all effects that can be inferred from the configuration of the invention described in the detailed description or claims of the present invention.

### BRIEF DESCRIPTION OF THE DRAWINGS

FIG. 1 is a perspective view illustrating a filter structure according to an exemplary embodiment of the present invention.
FIG. 2 is an exploded perspective view illustrating the configuration of the filter structure of FIG. 1.
FIG. 3 is a front view illustrating the configuration of the filter structure of FIG. 1.
FIG. 4 is a plan view illustrating the coupling structure between components of the filter structure of FIG. 1.
FIG. 5 is a usage state diagram illustrating a state in which each surface of the filter structure of FIG. 1 is arranged at least partially spaced apart.
FIG. 6 is a usage state diagram illustrating a path through which a fluid for cleaning flows in the filter structure of FIG. 1.
FIG. 7 is a plan view illustrating a filter structure according to another exemplary embodiment of the present invention.
FIG. 8 is a plan view illustrating a modified example of the filter structure according to the embodiment of FIG. 7.
FIG. 9 is an exploded perspective view illustrating a filter structure according to yet another exemplary embodiment of the present invention.
FIG. 10 is a side cross-sectional view illustrating the coupling structure between components of the filter structure of FIG. 9.
FIG. 11 is a partial enlarged view of part B in FIG. 10.
FIG. 12 is a usage state diagram illustrating a flow path of a fluid formed in the filter structure according to the embodiment of FIG. 9.

### DETAILED DESCRIPTION OF THE EMBODIMENTS

Hereinafter, exemplary embodiments of the present invention will be described in detail so that those of ordinary skill in the art can readily implement the present invention with reference to the accompanying drawings. The present invention may be embodied in many different forms and is not limited to the embodiments set forth herein. In the drawings, parts unrelated to the description are omitted for clarity of description of the present invention, and throughout the specification, same or similar reference numerals denote same elements.

Terms and words used in the present specification and claims should not be construed as limited to their usual or dictionary definition. They should be interpreted as meaning and concepts consistent with the technical idea of the present invention, based on the principle that inventors may appropriately define the terms and concepts to describe their own invention in the best way.

Accordingly, the embodiments described in the present specification and the configurations shown in the drawings correspond to preferred embodiments of the present invention, and do not represent all the technical idea of the present invention, so the configurations may have various examples of equivalent and modification that can replace them at the time of filing the present invention.

In the following description, in order to clarify the features of the present invention, descriptions of some components may be omitted.

The term "communication" used in the following description means that one or more members are connected to each other so as to be in fluid communication. In an embodiment, the communication may be formed by a member such as a conduit, a pipe, a tubing, or the like. In the following description, communication may be used in the same sense as one or more members are being "fluidically connected" to each other.

The term "fluid" used in the following description refers to any form of material that flows by external force and whose shape or volume can be changed. In an embodiment, the fluid may be a liquid such as water or a gas such as air.

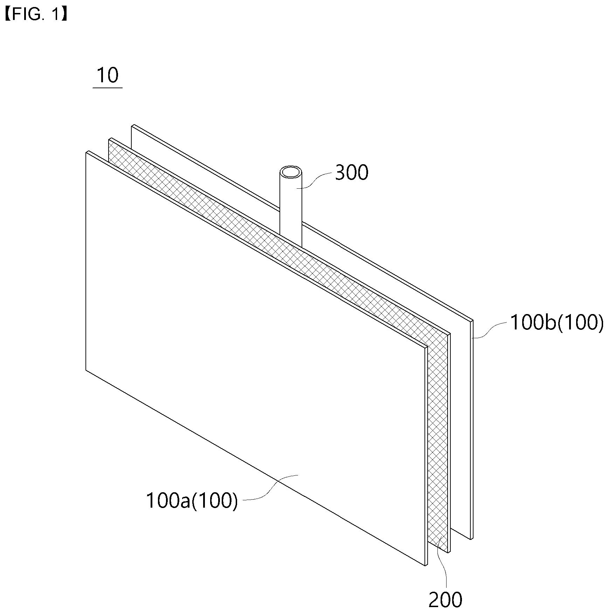

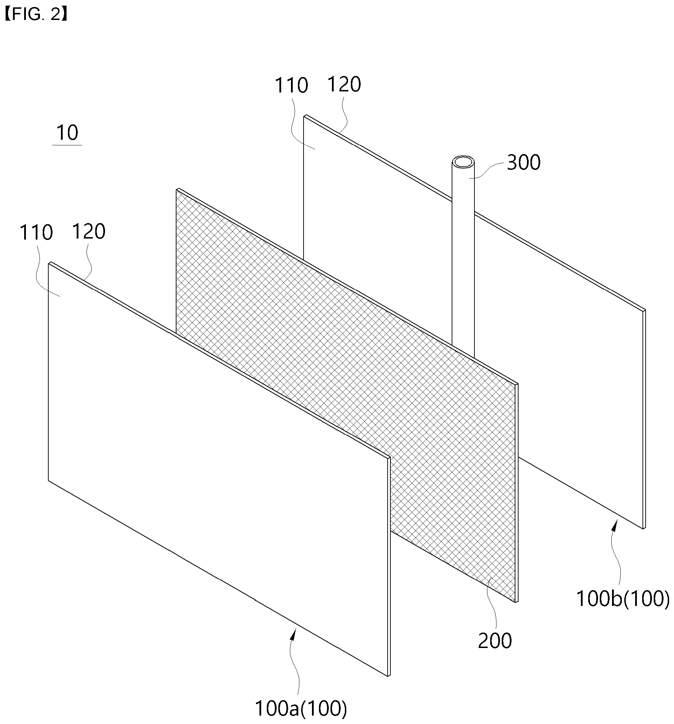

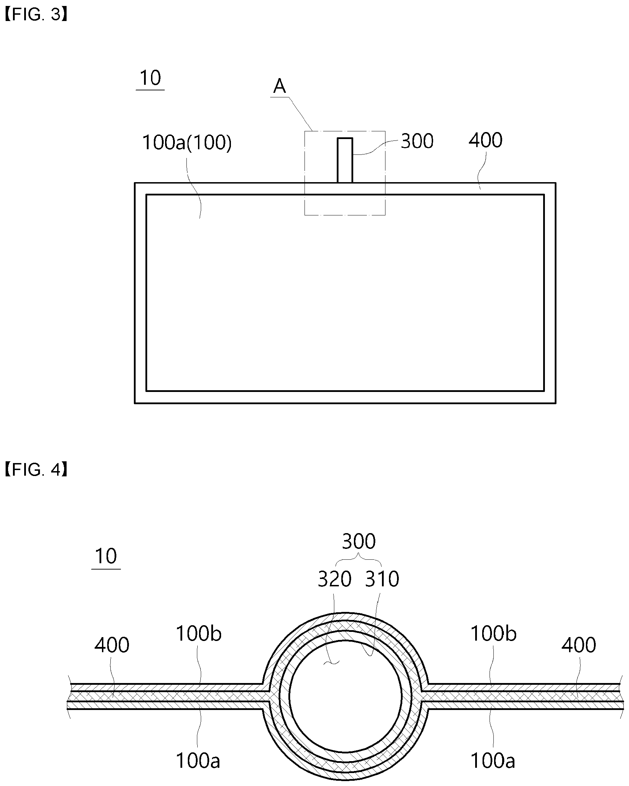

Referring to FIGS. 1 to 6, a filter structure 10 according to an exemplary embodiment of the present invention is exemplarily illustrated. The filter structure 10 according to an exemplary embodiment of the present invention may be provided in the form of a reverse osmosis (R/O) type filter that inversely utilizes an osmotic pressure phenomenon. In the above embodiment, the filter structure 10 may be configured to include a component for filtering raw water (i.e., a membrane member 100 to be described later) and a component for discharging filtered purified water to the outside (i.e., a tube member 300 to be described later).

The filter structure 10 may be wound and accommodated inside a housing (not shown). Specifically, the filter structure 10 may be accommodated inside the housing (not shown) in a state in which a membrane member 100 and a spacer member 200 are wound around a tube member 300. Raw water introduced into the housing (not shown) may be filtered while passing through the membrane member 100 along from one direction of the radial outer and inner directions to the other direction.

In this case, in the filter structure 10 according to an exemplary embodiment of the present invention, each part of the membrane member 100 that is wound and disposed adjacent to each other may be sufficiently spaced apart. Accordingly, foreign substances or the like separated from the raw water and located radially outside the membrane member 100 may be removed by a fluid for cleaning (hereinafter referred to as "cleaning water") introduced into a space formed by each part of the membrane member 100 being spaced apart from each other.

To this end, the filter structure 10 according to an exemplary embodiment of the present invention includes a sealing portion 400 arranged along the outer perimeter of the membrane member 100. As will be described later, the sealing portion 400 may be created in the process of coupling the outer perimeters of a pair of membrane members 100. The sealing portion 400 is formed to have a hardness different from that of the membrane member 100. The wound sealing portion 400 may be formed to have more external force in a radial outward direction than the wound membrane member 100.

Therefore, each part of the membrane member 100 disposed adjacent to each other along the radial direction may be disposed to be spaced apart from each other by the external force applied by the sealing portion 400. Accordingly, a sufficient space for the cleaning water to flow may be formed between said each parts of the membrane member 100.

In the illustrated embodiment, the filter structure 10 includes a membrane member 100, a spacer member 200, a tube member 300, and a sealing portion 400.

The membrane member 100 substantially performs a role of filtering raw water. The raw water may be generated as purified water by passing through the membrane member 100 so that foreign substances or the like are removed.

The membrane member 100 may be provided in any form capable of filtering out foreign substances or the like contained in raw water. In an embodiment in which the filter structure 10 is provided as a reverse osmosis type filter, the membrane member 100 may be provided in the form of an RO membrane.

A plurality of membrane members 100 may be provided. The plurality of membrane members 100 may be disposed to face each other with the spacer member 200 and the tube member 300 interposed therebetween. The plurality of membrane members 100 may be disposed to surround the spacer member 200 and the tube member 300 at different positions.

In the illustrated embodiment, a pair of membrane members 100 are provided, including a first membrane member 100a positioned on the front side and a second membrane member 100b positioned on the rear side. The first membrane member 100a and the second membrane member 100b are arranged to face each other with the spacer member 200 and the tube member 300 interposed therebetween.

The membrane member 100 surrounds the spacer member 200. As will be described later, the plurality of membrane members 100 are coupled to each other by the sealing portion 400, and the inner space thereof is sealed along the outer perimeter direction. In this case, the spacer member 200 is configured to at least partially separate the pair of membrane members 100 to form a space where generated water can flow.

The membrane member 100 surrounds the tube member 300. The tube member 300 constitutes a flow path through which purified water flowing in the space formed by the spacer member 200 flows out to the outside.

The membrane member 100 may be provided in any form capable of filtering raw water to generate purified water, and surrounding the spacer member 200 and the tube member 300. In the illustrated embodiment, the membrane member 100 is provided in the form of a membrane having a length in the left-right direction longer than a length in the up-down direction and a thickness in the front-rear direction.

In the illustrated embodiment, the membrane member 100 includes a membrane member surface 110 and a membrane member outer perimeter 120.

The membrane member surface 110 constitutes a body of the membrane member 100. The membrane member surface 110 is a portion through which raw water passes and is filtered. The membrane member surface 110 may be formed to have a predetermined area so that the contact area with the raw water can be maximized.

The membrane member outer perimeter 120 may be defined as the outer perimeter of the membrane member surface 110. The membrane member outer perimeter 120 extends along the outer perimeter of the membrane member surface 110. In the illustrated embodiment, the membrane member outer perimeter 120 is configured to include one pair extending in the left-right direction and spaced apart in the up-down direction and another pair extending in the up-down direction and spaced apart in the left-right direction.

The membrane member outer perimeter 120 is coupled to the sealing portion 400. Specifically, the membrane member outer perimeter 120 provided in the first membrane member 100a and the membrane member outer perimeter 120 provided in the second membrane member 100b may be coupled to each other by the sealing portion 400.

Accordingly, a space formed between the first membrane member 100a and the second membrane member 100b, that is, a space for accommodating the spacer member 200 and the tube member 300, may be sealed by the sealing portion 400 formed along the membrane member outer perimeter 120. Therefore, it will be understood that the raw water can enter the space only by passing through the membrane member surface 110 and can flow out to the outside only through the tube member 300.

The spacer member 200 is positioned between a plurality of membrane members 100 to separate the plurality of membrane members 100. The spacer member 200 forms a space between the plurality of membrane members 100. In the space, the tube member 300 may be accommodated, and purified water filtered while passing through the membrane member 100 may flow.

The spacer member 200 is coupled to the membrane member 100. Specifically, the spacer member 200 is accommodated in a space formed by combining the plurality of membrane members 100. In an embodiment, the spacer member 200 may be disposed to overlap the membrane member outer perimeter 120 and be coupled to the membrane member 100 by the sealing portion 400. In the above embodiment, the spacer member 200 may have a shape corresponding to the shape of the membrane member 100.

The spacer member 200 is located adjacent to the tube member 300. Specifically, the spacer member 200 is disposed to cover the tube member 300 located inside any one of the plurality of membrane members 100. In the illustrated embodiment, the spacer member 200 is positioned on the front side of the tube member 300. In the above embodiment, the spacer member 200 is positioned between the first membrane member 100a and the tube member 300.

The spacer member 200 may be provided in any form, which may be positioned between the plurality of membrane members 100 to form a space in which purified water flows and the tube member 300 may be accommodated. In the illustrated embodiment, the spacer member 200 is provided in a plate shape having a length in the left-right direction longer than a height in the up-down direction and a thickness in the front-rear direction.

In this case, a plurality of through holes may be formed inside the spacer member 200. The through holes may constitute a passage through which purified water flows. That is, in the embodiment, the spacer member 200 is provided in a mesh shape.

The membrane member 100 and the spacer member 200 may be wound around the tube member 300 to form the filter structure 10.

The tube member 300 constitutes a passage through which purified water introduced between the plurality of membrane members 100 flows out to the outside. The tube member 300 is located at least partially in a space between the plurality of membrane members 100.

The tube member 300 is positioned between the plurality of membrane members 100 and the spacer member 200. In the illustrated embodiment, the tube member 300 is positioned between the spacer member 200 and the second membrane member 100b.

The tube member 300 may extend in a direction corresponding to the height direction of the membrane member 100 or the spacer member 200. In the illustrated embodiment, the tube member 300 extends in the up-down direction. The lower portion of the tube member 300 is positioned between a pair of membrane members 100. The upper portion of the tube member 300 is exposed to the outside of the pair of membrane members 100.

Purified water introduced into the space formed between the plurality of membrane members 100 may be introduced into the tube member 300 through the lower portion of the tube member 300. The introduced purified water may be discharged to the outside through the upper portion of the tube member 300.

The tube member 300 may be provided in any form capable of forming an outflow flow path for purified water by communicating with a space formed between the plurality of membrane members 100 and the outside, respectively. In the illustrated embodiment, the tube member 300 includes a tube body 310 and a tube hollow 320.

The tube body 310 forms an outer shape of the tube member 300. The tube body 310 is coupled to the membrane member 100 and the spacer member 200, respectively. The outer circumference of the tube body 310 may be surrounded by the membrane member 100 and the spacer member 200. In addition, the outer circumference of the tube body 310 may be surrounded by the sealing portion 400 formed by combining the plurality of membrane members 100.

The tube body 310 may have any shape that may be coupled to the membrane member 100 and the spacer member 200, respectively. In the illustrated embodiment, the tube body 310 has a cylindrical shape having a circular cross-section and having a height in the up-down direction.

Although not shown, a through hole (not shown) may be formed in a part of the outer circumference of the tube body 310 positioned in a space between the membrane members 100, that is, at a lower side. The through hole (not shown) may constitute a passage through which purified water introduced into the space between the membrane members 100 is introduced into the tube body 310.

In the embodiment, a plurality of through holes (not shown) may be formed to be spaced apart from each other in the longitudinal direction of the tube body 310, that is, in the up-down direction. Accordingly, the purified water introduced into the space between the membrane members 100 may flow evenly along the longitudinal direction of the tube body 310 and be introduced into the space formed inside the tube body 310 (i.e., the tube hollow 320).

In the above embodiment, the area of the dead space among the portions of the membrane member 100 is minimized, so that the filtration efficiency of the raw water may be improved.

The tube hollow 320 is formed inside the tube body 310.

The tube hollow 320 is a space formed inside the tube body 310. The tube hollow 320 communicates with a space formed between the plurality of membrane members 100 and the outside, respectively. The tube hollow 320 constitutes a flow path through which purified water introduced into the space formed between the plurality of membrane members 100 flows out to the outside.

The tube hollow 320 is formed through the inside of the tube body 310. Each end in the extension direction of the tube hollow 320, that is, the upper end and the lower end in the illustrated embodiment, are each formed open. The upper end of the tube hollow 320 communicates with the outside, and the lower end of the tube hollow 320 communicates with the space formed between the plurality of membrane members 100.

As described above, in an embodiment in which a plurality of through holes (not shown) are formed on the outer circumference of the tube body 310, the tube hollow 320 may communicate, by the plurality of through holes (not shown), with a space formed between the plurality of membrane members 100.

The tube hollow 320 may have any shape capable of forming an outflow flow path for purified water inside the tube body 310. In the illustrated embodiment, the tube hollow 320 is formed as a cylindrical space having a circular cross-section and having a height in the up-down direction.

The sealing portion 400 is formed by coupling a plurality of membrane members 100. The sealing portion 400 may be formed by combining the membrane member outer perimeter 120 provided in each of the plurality of membrane members 100. In the illustrated embodiment, the sealing portion 400 is formed by coupling a membrane member outer perimeter 120 provided in the first membrane member 100a and a membrane member outer perimeter 120 provided in the second membrane member 100b.

Accordingly, it will be understood that the sealing portion 400 extends along the membrane member outer perimeter 120. In the illustrated embodiment, the sealing portion 400 is configured to include one pair extending in the left-right direction and spaced apart in the up-down direction and another pair extending in the up-down direction and spaced apart in the left-right direction.

The sealing portion 400 may be formed in any form capable of coupling the membrane member outer perimeter 120 of the first membrane member 100a and the membrane member outer perimeter 120 of the second membrane member 100b. In an embodiment, the sealing portion 400 may be formed by heat staking each membrane member outer perimeter 120 to each other.

In another embodiment, the sealing portion 400 may be formed of a separate material for bonding each membrane member outer perimeter 120. In the above embodiment, the sealing portion 400 may be formed by coupling each membrane member outer perimeter 120 by a polyurethane sealant.

In any case, it is sufficient if a plurality of membrane members 100 and a tube member 300 positioned therebetween can be sealed by the sealing portion 400.

Meanwhile, the sealing portion 400 may be formed to have a hardness different from that of a part of the membrane member 100, in which the sealing portion 400 is not formed, that is, the membrane member surface 110. In an embodiment, the sealing portion 400 may be formed to have a hardness greater than or equal to that of the membrane member surface 110.

Therefore, when the membrane member 100 and the spacer member 200 positioned therebetween are wound around the tube member 300, the size of the force that the sealing portion 400 intends to move radially outward of the tube member 300 may be larger than the size of the force that the membrane member surface 110 intends to move radially outward of the tube member 300.

As described above, the sealing portion 400 is formed not only at each edge of the membrane member 100 in the height direction, but also at each edge of the membrane member 100 in the width direction. Therefore, the sealing portion 400 tends to move radially outward compared to the membrane member surface 110 not only in the outer perimeter direction of the membrane member 100 but also in the height direction.

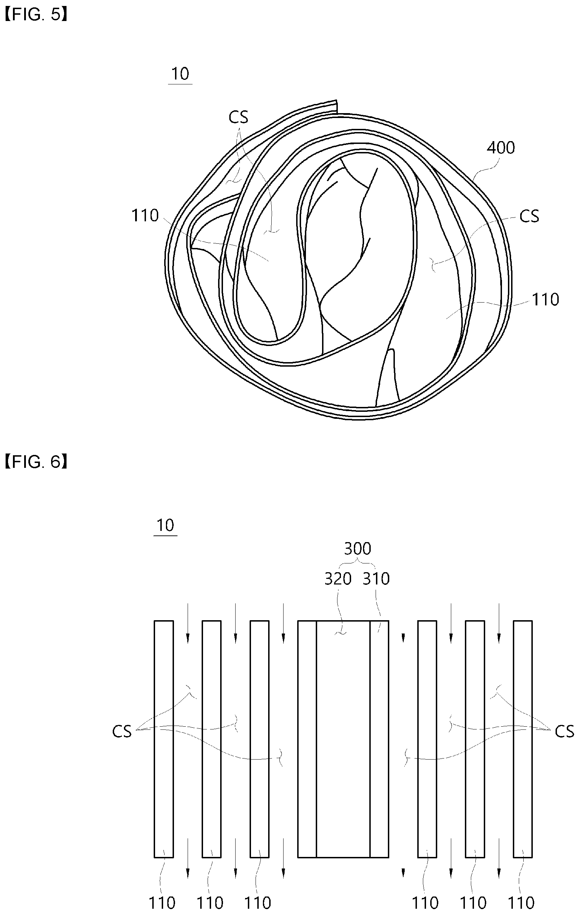

As a result, as best illustrated in FIG. 5, multiple layers of membrane member surfaces 110 wound around tube member 300 are placed at least partially spaced apart along the radial direction. Therefore, a cleaning space CS, which is a space in which cleaning water may flow, may be formed between the membrane member surfaces 110 adjacent to each other.

Therefore, the cleaning water may flow smoothly in the cleaning space CS, and foreign substances or the like attached to the membrane member surface 110 may be cleaned and then discharged to the outside. Accordingly, the cleaning efficiency of the membrane member 100 is improved, and as a result, the filtration efficiency of the filter structure 10 may be improved.

In this case, a plurality of cleaning spaces CS may be formed. The plurality of cleaning spaces CS may have different lengths in the radial direction from the center of the tube member 300 on which the membrane member 100 is wound between the membrane member surfaces 110 disposed to overlap each other in the radial direction. In other words, one cleaning space CS may be located closer to the tube member 300 along the radial direction, and the other cleaning space CS may be located farther away from the tube member 300 along the radial direction.

In addition, the plurality of cleaning spaces CS may be formed to have different lengths. Specifically, the plurality of cleaning spaces CS may be formed to have different lengths in the radial direction. In addition, the plurality of cleaning spaces CS may be formed to have different lengths in the outer perimeter direction of the filter structure 10. Furthermore, the plurality of cleaning spaces CS may be formed to have different lengths in the height direction of the tube member 300, that is, in the up-down direction.

Accordingly, the membrane member surfaces 110 disposed to overlap each other in the radial direction may be located at different distances along the radial direction. In addition, the membrane member surfaces 110 disposed to overlap each other in the radial direction may be located at different distances along the height direction.

That is, the membrane member surfaces 110 disposed to overlap each other along the radial direction are disposed at least partially spaced apart along the radial direction. Accordingly, adsorption between the membrane member surfaces 110 may be prevented, the cleaning water may flow smoothly to clean the membrane member surfaces 110.

Referring to FIG. 6, a flow path of cleaning water formed inside the filter structure 10 according to an exemplary embodiment of the present invention is exemplarily illustrated.

In the illustrated embodiment, the tube member 300 is positioned at the center of the membrane member 100 and the spacer member 200 wound around the membrane member 100. Although not shown, it will be understood that the sealing portion 400 is formed on the membrane member outer perimeter 120 of the membrane member 100.

In this case, the membrane member surfaces 110 disposed to overlap each other along the radial direction around the tube member 300 are arranged at least partially spaced apart along the radial direction or height direction. Accordingly, a cleaning space CS through which cleaning water may flow is formed between a pair of membrane member surfaces 110 located adjacent to each other. The introduced cleaning water may flow while cleaning the pair of membrane member surfaces 110 surrounding the cleaning space CS, respectively.

Accordingly, the cleaning efficiency of the membrane member 100 is improved, so that the filtration efficiency of the membrane member 100 and the filter structure 10 including the same can be improved and the durability can be increased.

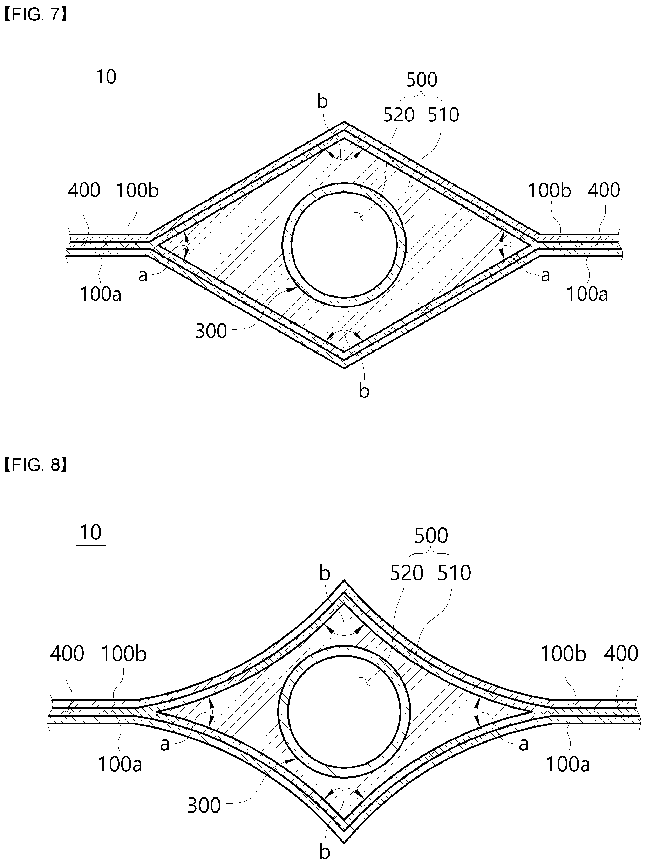

Referring to FIGS. 7 to 8, a filter structure 10 according to another exemplary embodiment of the present invention is shown. In the illustrated embodiment, the filter structure 10 includes a membrane member 100, a spacer member 200 (not shown), a tube member 300, a sealing portion 400, and a coupling member 500.

The filter structure 10 according to the present embodiment is different from the filter structure 10 according to the above-described embodiment in that it further includes a coupling member 500. In addition, the membrane member 100, the spacer member 200, the tube member 300, and the sealing portion 400 have the same structure and function as the membrane member 100, the spacer member 200, the tube member 300, and the sealing portion 400 provided in the filter structure 10 according to the above-described embodiment.

Accordingly, in the following description, the filter structure 10 according to the present embodiment will be described focusing on the coupling member 500.

The coupling member 500 is positioned between a pair of membrane members 100a and 100b (or the sealing portion 400 for coupling them) and the tube member 300. The tube member 300 is coupled to the pair of membrane members 100a and 100b via the coupling member 500.

As described above, the tube member 300 is configured to include a tube body 310 having a circular cross-section. If the sealing portion 400 is formed to directly surround the outer circumference of the tube body 310, it is difficult for the sealing portion 400 to completely surround the outer circumference of the tube body 310 due to the shape of the tube body 310 formed to be rounded to the outside.

In the above case, since the pair of membrane members 100a and 100b and the tube member 300 are not closely coupled to each other, a space formed between the pair of membrane members 100a and 100b may not be completely sealed. In this case, there is a concern that raw water is introduced into the space without passing through the membrane member surface 110, or that purified water introduced into the space flows back into the space where the raw water stays.

Accordingly, the filter structure 10 according to the present embodiment further includes a coupling member 500 mediating the coupling of the membrane member 100 (or sealing portion 400) and the tube member 300. The coupling member 500 may be coupled to the tube member 300 and the sealing portion 400, respectively, to reliably and closely couple them to each other.

Specifically, the coupling member 500 is coupled to the membrane member 100 (or the sealing portion 400 formed on the membrane member outer perimeter 120). The coupling member 500 may be surrounded by the sealing portion 400. The coupling member 500 may be closely coupled to the sealing portion 400.

In addition, the coupling member 500 is coupled to the tube member 300. The coupling member 500 may accommodate the tube member 300 in a space formed therein (i.e., a coupling hollow 520 to be described later).

In the illustrated embodiment, the coupling member 500 includes a coupling body 510 and a coupling hollow 520.

The coupling body 510 forms an outer shape of the coupling member 500. The coupling body 510 is a portion in which the coupling member 500 is coupled to the membrane member 100 (or the sealing portion 400). The outer perimeter of the coupling body 510 is closely coupled to the inner perimeter of the membrane member 100 (or the sealing portion 400).

The coupling body 510 may be formed such that a rounded portion thereof is minimized. In an embodiment, the coupling body 510 may be configured to include only a flat surface. In another embodiment, the coupling body 510 may be configured to include a curved surface extending in a round manner inward.

In addition, the cross-sectional area of the coupling body 510 may be formed to decrease as it is away from the tube member 300 located therein along the outer perimeter direction of the membrane member 100, that is, the left-right direction in the illustrated embodiment. Therefore, the membrane member 100 (or sealing portion 400) and the coupling body 510 can be more reliably and closely coupled in a direction toward the center at each end in the left-right direction of the coupling body 510.

The coupling body 510 may be formed so that the height and width of its cross-section are different from each other. That is, as shown in FIGS. 7 to 8, the coupling body 510 may be formed to have a length in the longitudinal direction of the membrane member 100, that is, in the left-right direction, longer than a length in the width direction of the membrane member 100, that is, in the front-rear direction.

In addition, the cross-section of the coupling body 510 may have a first angle (a), which is an angle of an edge disposed at each end of the outer perimeter direction of the membrane member 100, that is, the left end and the right end in the illustrated embodiment, formed at an acute angle. In other words, the cross-section of the coupling body 510 may have a first angle (a) between a pair of sides extending in the outer perimeter direction of the membrane member 100 and disposed to face each other in the thickness direction of the membrane member 100, to be formed at an acute angle.

In addition, the cross-section of the coupling body 510 may have a second angle (b), which is an angle of edges disposed at each end of the thickness direction of the membrane member 100, that is, the front end and the rear end, formed at a right angle or obtuse angle. In any case, it is sufficient if the first angle (a) is formed to be less than or equal to the second angle (b), so that the inclination of the membrane member 100 in the outer perimeter direction among the sides of the cross-section of the coupling body 510 is smaller than the inclination of the membrane member 100 in the thickness direction.

By the structure of the coupling body 510 as described above, the membrane member 100 (or the sealing portion 400) may be more reliably and closely coupled to the end of the coupling body 510.

The coupling hollow 520 is a space formed inside the coupling body 510. The coupling hollow 520 accommodates the tube body 310. The coupling hollow 520 is formed through the height direction of the coupling body 510, that is, the up-down direction.

The coupling hollow 520 may have a shape corresponding to the shape of the tube body 310. In the illustrated embodiment, the coupling hollow 520 is formed as a cylindrical space having a circular cross-section and a height in the up-down direction.

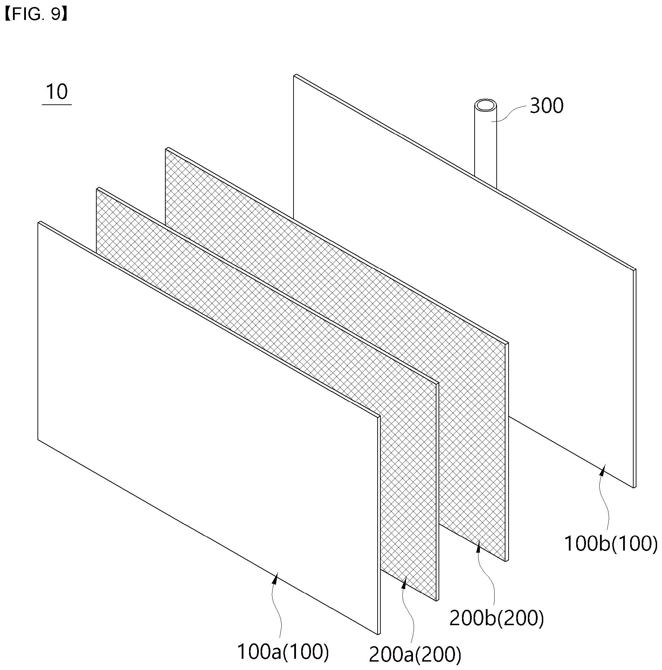

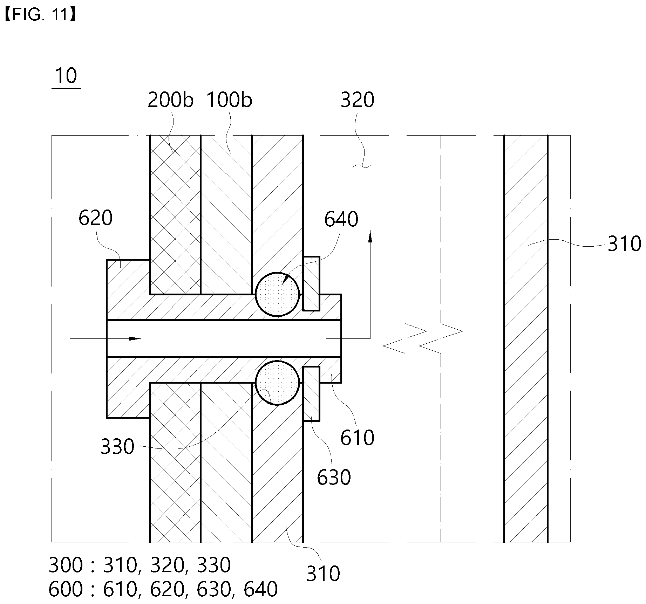

Referring to FIGS. 9 to 12, a filter structure 10 according to another exemplary embodiment of the present invention is shown. In the illustrated embodiment, the filter structure 10 includes a membrane member 100, a spacer member 200, a tube member 300, a sealing portion 400, and an adapter member 600.

The filter structure 10 according to the present embodiment is different from the filter structure 10 according to the above-described embodiment in that it further includes an adapter member 600. In addition, a plurality of spacer members 200 are provided, including a first spacer member 200a and a second spacer member 200b.

Furthermore, the tube member 300 is located on the rear side of the second membrane member 100b, not between a pair of membrane members 100a and 100b. That is, the tube member 300 is located outside a space formed between the pair of membrane members 100a and 100b.

Accordingly, a configuration for introducing filtered purified water through the pair of membrane members 100a and 100b into the tube member 300 is required. To this end, the filter structure 10 according to the present embodiment is configured to further include an adapter member 600.

In addition, the membrane member 100 and the sealing portion 400 have the same structure and function as the membrane member 100 and the sealing portion 400 according to the above-described embodiment.

Accordingly, in the following description, the filter structure 10 according to the present embodiment will be described focusing on the spacer member 200, the tube member 300, and the adapter member 600.

A plurality of spacer members 200 according to the present embodiment are provided. The plurality of spacer members 200 are positioned between the pair of membrane member 100a and 100b. The plurality of spacer members 200 are disposed to overlap each other in a direction in which the pair of membrane member 100a and 100b overlap, that is, in the front-rear direction in the illustrated embodiment. A space through which purified water may flow is formed between the plurality of spacer members 200.

Any one of the plurality of spacer members 200 is coupled to the adapter member 600. The adapter member 600 communicates with the space by the one of the spacer members 200. Accordingly, the purified water introduced into the space may flow out to the tube member 300 through the adapter member 600.

In the illustrated embodiment, the spacer member 200 is provided as a pair including a first spacer member 200a and a second spacer member 200b. The first spacer member 200a is positioned at the front side and between the first membrane member 100a and the second spacer member 200b. The second spacer member 200b is positioned at the rear side and between the first spacer member 200a and the second membrane member 100b.

A space through which purified water flows is formed between the first spacer member 200a and the second spacer member 200b. The adapter member 600 may be at least partially positioned in the space.

The first spacer member 200a and the second spacer member 200b surround the adapter member 600 accommodated in the space in the thickness direction, that is, in the front-rear direction thereof. Accordingly, direct contact between the adapter member 600 and the membrane member 100 may be prevented, and damage to the membrane member 100 by the adapter member 600 may be prevented.

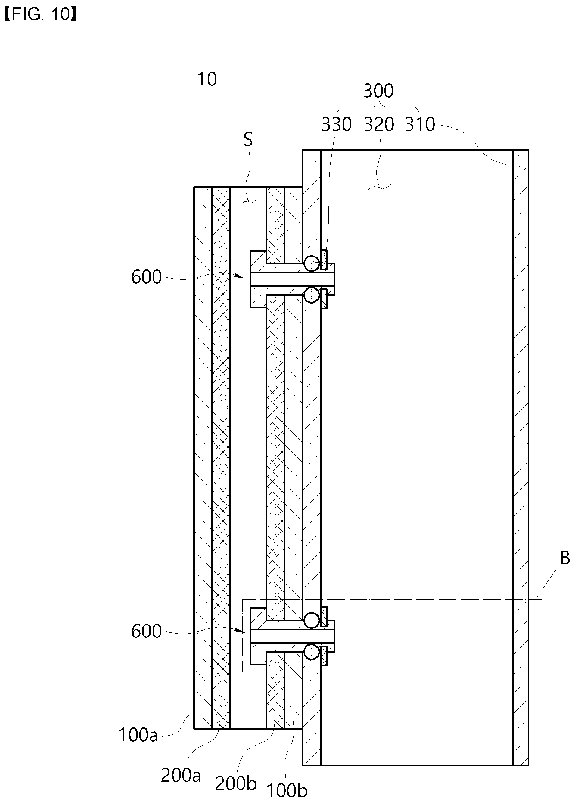

Meanwhile, through holes (see FIGS. 10 to 11 and reference numeral not indicated) through which the adapter member 600 passes may be formed in the second membrane member 100b and the second spacer member 200b. The diameter of the cross-section of the through hole may be formed to be less than or equal to the diameter of the cross-section of an adapter body 610 and an adapter base 620.

The tube member 300 according to the present embodiment is located outside the pair of membrane members 100a and 100b. In the illustrated embodiment, the tube member 300 is located on the rear side of the second membrane member 100b located on the rear side. In the above embodiment, the tube member 300 is disposed to face the second spacer member 200b with the second membrane member 100b interposed therebetween.

In the above embodiment, the tube member 300 communicates with a space formed between the pair of membrane members 100a and 100b through the adapter member 600. To this end, the tube member 300 includes an additional component for coupling and communicating with the adapter member 600.

In the illustrated embodiment, the tube member 300 includes a tube body 310, a tube hollow 320, and a tube opening 330. The tube body 310 and the tube hollow 320 according to the present embodiment have the same structure and function as the tube body 310 and the tube hollow 320 provided in the tube member 300 according to the above-described embodiment, and thus will be replaced with the above-described description.

The tube opening 330 is a portion where the tube member 300 is coupled to the adapter member 600. The tube opening 330 is formed through the outer perimeter of the tube body 310 in the radial direction. The adapter member 600 may penetrate the tube opening 330 and be at least partially accommodated in the tube hollow 320. Accordingly, the tube hollow 320 may communicate with the adapter member 600.

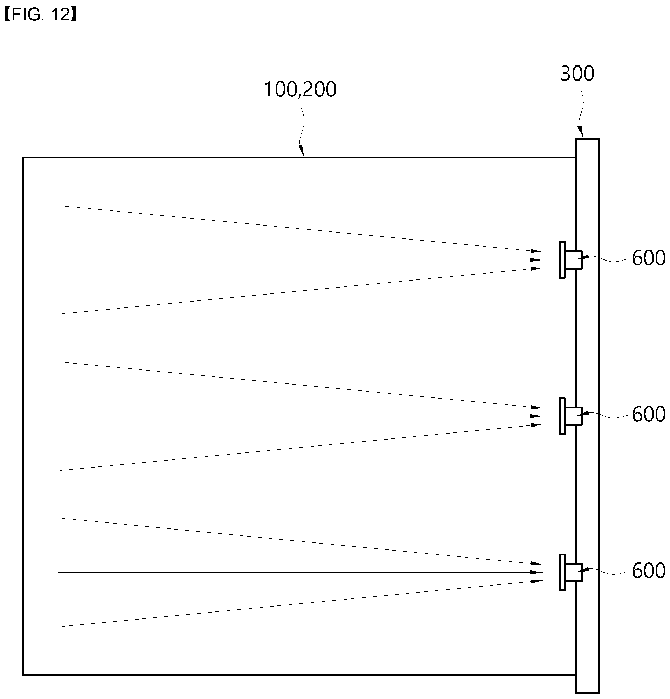

A plurality of tube openings 330 may be formed. The plurality of tube openings 330 may be spaced apart from each other in the longitudinal direction of the tube body 310, that is, in the up-down direction in the illustrated embodiment. In the embodiment shown in FIG. 10, two tube openings 330 are formed and are spaced apart from each other in the up-down direction. In addition, in the embodiment shown in FIG. 12, three tube openings 330 are formed and are spaced apart in the up-down direction.

In either case, it is sufficient if a plurality of tube openings 330 are spaced apart in the longitudinal direction of the tube body 310 and communicate with a plurality of adapter members 600, respectively.

The tube opening 330 may have a shape corresponding to the shape of the adapter member 600.

In the illustrated embodiment, the tube opening 330 is formed as a cylindrical space having a circular cross-section and penetrating in the radial direction, corresponding to the shape of the adapter body 610 of the adapter member 600 formed in a cylindrical shape.

In this case, the diameter of the cross-section of the tube opening 330 may be equal to or less than the outer diameter of the cross-section of the adapter body 610. Accordingly, the outer perimeter of the adapter body 610 and the inner perimeter of the tube opening 330 may be sealed by an adapter sealing member 640.

In addition, the diameter of the cross-section of the tube opening 330 may be equal to or less than the inner diameter of the cross-section of an adapter support member 630. Accordingly, the adapter member 600 may not be arbitrarily withdrawn from the tube opening 330 due to the adapter support member 630.

The adapter member 600 communicates the tube member 300 with a space between the pair of membrane members 100a and 100b. The adapter member 600 is coupled to and communicates with the pair of membrane members 100a and 100b and the tube member 300, respectively.

Specifically, the adapter member 600 is coupled to the second membrane member 100b and the second spacer member 200b positioned adjacent to the tube member 300, respectively. The adapter member 600 communicates with a space formed between the first spacer member 200a and the second spacer member 200b.

In addition, the adapter member 600 penetrates the tube opening 330 and is coupled to the tube member 300. The adapter member 600 communicates with the tube hollow 320. Accordingly, the tube hollow 320 may communicate with a space formed between the pair of membrane members 100a and 100b (or the pair of spacer members 200a and 200b).

A plurality of adapter members 600 may be provided. The plurality of adapter members 600 may be coupled to a plurality of tube openings 330 and a plurality of through holes (i.e., formed in the membrane member 100 and the spacer member 200), respectively, to communicate the space with the tube hollow 320. In the embodiment shown in FIG. 10, two adapter members 600 are provided, and in the embodiment shown in FIG. 12, three adapter members 600 are provided.

In either case, it is sufficient if a plurality of adapter members 600 can communicate the space and tube hollow 320 at multiple points along the height direction.

In the illustrated embodiment, the adapter member 600 includes an adapter body 610, an adapter base 620, an adapter support member 630, and an adapter sealing member 640.

The adapter body 610 constitutes a portion of the adapter member 600. The adapter body 610 is a portion where the adapter member 600 is coupled to the second membrane member 100b, the second spacer member 200b, and the tube opening 330. The adapter body 610 extends in a direction in which the second membrane member 100b and the second spacer member 200b overlap each other, that is, in the front-rear direction in the illustrated embodiment.

The adapter body 610 is through-coupled to the second membrane member 100b and the second spacer member 200b, respectively. The adapter body 610 is located at least partially in a space formed between the first membrane member 100a and the second membrane member 100b. In the illustrated embodiment, the front end of the adapter body 610 is located in the space.

The adapter body 610 penetrates the tube opening 330. The adapter body 610 is located at least partially in the tube hollow 320. In the illustrated embodiment, the rear end of the adapter body 610 is located in the tube hollow 320.

The adapter body 610 may have a shape corresponding to the shapes of a through hole (reference numeral not indicated) and a tube opening 330 formed in the second membrane member 100b and the second spacer member 200b, respectively. In the illustrated embodiment, the adapter body 610 is formed in a cylindrical shape having a circular cross-section and having a length in the front-rear direction.

In the above embodiment, the diameter of the cross-section of the adapter body 610 may be formed to be equal to or less than the diameter of the cross-sections of the through hole (reference numeral not indicated) and the tube opening 330 formed in the second membrane member 100b and the second spacer member 200b.

A hollow is formed through the inside of the adapter body 610. The hollow extends in the extension direction of the adapter body 610, that is, in the front-rear direction in the illustrated embodiment. Each end of the hollow in the extension direction, that is, the front end and the rear end in the illustrated embodiment, are each formed open.

One end of the hollow in the extension direction, that is, the front end in the illustrated embodiment, communicates with the space partially surrounded by the second spacer member 200b. The other end of the hollow in the extension direction, that is, the rear end in the illustrated embodiment, communicates with the tube hollow 320.

The adapter body 610 is continuous with the adapter base 620.

The adapter base 620 supports the adapter body 610 penetratingly coupled to the second spacer member 200b. The adapter base 620 may be positioned in a space partially surrounded by the second spacer member 200b and may be in contact with the second spacer member 200b.

The adapter base 620 is continuous with the adapter body 610. The adapter base 620 is continuous with one of the ends of the adapter body 610 facing the space, that is, the front end in the illustrated embodiment. The adapter base 620 extends radially outward from the outer perimeter of the adapter body 610.

The adapter base 620 may have any shape capable of supporting the adapter body 610 in a state of being coupled to the second membrane member 100b and the second spacer member 200b. In the illustrated embodiment, the adapter base 620 has a disc shape having a circular cross-section and having a thickness in the front-rear direction. In the above embodiment, the diameter of the cross-section of the adapter base 620 may be greater than or equal to the diameter of the cross-section of the adapter body 610.

In an embodiment, the adapter base 620 may be separately provided and coupled to the adapter body 610. In either case, it is sufficient if the adapter base 620 supports the adapter body 610 penetrating the second membrane member 100b or the second spacer member 200b to prevent arbitrary separation.

A through hole is formed inside the adapter base 620. The through hole extends in the thickness direction of the adapter base 620, that is, in the front-rear direction in the illustrated embodiment, and communicates with the hollow formed inside the adapter body 610.

The adapter support member 630 supports the adapter body 610 penetrating the tube opening 330. The adapter support member 630 may be positioned in the tube hollow 320 and may be in contact with the inner perimeter of the tube body 310.

The adapter support member 630 is coupled to the adapter body 610. The adapter support member 630 is coupled to the other end of the ends of the adapter body 610 facing the tube hollow 320, i.e., the rear end in the illustrated embodiment. The adapter support member 630 may surround an outer perimeter of the adapter body 610 and may be coupled to the adapter body 610. The adapter support member 630 extends from the radially outward of the outer perimeter of the adapter body 610 in the radial direction.

The adapter support member 630 may have any shape capable of supporting the adapter body 610 in a state of being coupled to the tube member 300. In the illustrated embodiment, the adapter support member 630 has a disk shape having a ring shape cross-section and having a thickness in the front-rear direction. In the above embodiment, a through hole may be formed inside the adapter support member 630 to accommodate the adapter body 610.

In addition, in the above embodiment, the outer diameter of the cross-section of the adapter support member 630 may be formed to be greater than or equal to the diameter of the cross-section of the tube opening 330. In addition, the inner diameter of the cross-section of the adapter support member 630 (i.e., the diameter of the inner perimeter surrounding the through hole) may be formed to be less than or equal to the diameter of the cross-section of the adapter body 610.

In an embodiment, the adapter support member 630 may be integrally formed with the adapter body 610. In either case, it is sufficient if the adapter support member 630 supports the adapter body 610 penetrating the tube opening 330 to prevent arbitrary separation.

The adapter sealing member 640 surrounds the adapter body 610 penetrating the tube opening 330. The adapter sealing member 640 is configured to seal the remaining portion of the tube opening 330 except for a portion in which the adapter body 610 is accommodated.

The adapter sealing member 640 may have a shape corresponding to the shape of the tube opening 330 or the adapter body 610. In the illustrated embodiment, the adapter sealing member 640 is formed in a ring shape. In the above embodiment, the outer diameter of the cross-section of the adapter sealing member 640 may be less than or equal to the diameter of the cross-section of the tube opening 330.

An opening for accommodating the adapter body 610 is formed inside the adapter sealing member 640. The diameter of the cross-section of the opening may be less than or equal to the diameter of the cross-section of the adapter body 610.

Accordingly, in the above embodiment, the adapter body 610 may be fitted and coupled to the tube opening 330 by the adapter sealing member 640. Accordingly, the tube opening 330 is closed, so that any flow of raw water or purified water through the tube opening 330 may be prevented.

The adapter sealing member 640 may be provided in any form capable of being coupled to the adapter body 610 and sealing the tube opening 330. In an embodiment, the adapter sealing member 640 may be configured to be formed of a material having a predetermined elasticity, be deformed in shape, store restoring force, and elastically support the adapter body 610 by the stored restoring force. In the above embodiment, the adapter sealing member 640 may be formed including a material such as rubber or silicone.

Referring to FIG. 12, a flow of raw water formed inside the filter structure 10 according to an exemplary embodiment of the present invention is shown as an example. It is assumed that FIG. 12 is an embodiment in which the adapter member 600 is provided, that is, the filter structure 10 according to the embodiment shown in FIGS. 9 to 11. Alternatively, it will be understood that if a plurality of through holes to be spaced apart in the longitudinal direction are formed in the tube body 310, the filter structure 10 according to the embodiment shown in FIGS. 1 to 8 may also have a flow of the illustrated raw water.

As described above, a plurality of adapter members 600 may be provided to be spaced apart from each other in the longitudinal direction of the tube body 310, that is, in the up-down direction in the illustrated embodiment. The plurality of adapter members 600 may be respectively coupled to the plurality of tube openings 330 to communicate the tube hollow 320 with a space formed inside the plurality of membrane members 100.

Accordingly, purified water filtered while passing through the membrane member 100 may be introduced into the tube hollow 320 at various positions along the longitudinal direction of the tube body 310. Accordingly, since the purified water may flow evenly along the height direction of the filter structure 10, the dead volume inside the filter structure 10 may be minimized.

As a result, even when the flow rate of raw water to be filtered and the flow rate of generated purified water increase, purified water may flow smoothly and flow out to the outside through tube member 300. Accordingly, water purification efficiency and speed may be improved.

Although exemplary embodiments of the present invention have been described, the idea of the present invention is not limited to the embodiments set forth herein. Those of ordinary skill in the art who understand the idea of the present invention may easily propose other embodiments through supplement, change, removal, addition, etc. of elements within the same idea, but the embodiments will be also within the scope of the present invention.

**<Description of Symbols>**

| | | | |
|---|---|---|---|
| 10: | filter structure | 100: | membrane member |
| 100a: | first membrane member | 100b: | second membrane member |
| 110: | membrane member surface | 120: | membrane member outer perimeter |
| 200: | spacer member | 200a: | first spacer member |
| 200b: | second spacer member | 300: | tube member |
| 310: | tube body | 320: | tube hollow |
| 330: | tube opening | 400: | sealing portion |
| 500: | coupling member | 510: | coupling body |
| 520: | coupling hollow | 600: | adapter member |
| 610: | adapter body | 620: | adapter base |
| 630: | adapter support member | 640: | adapter sealing member |
| CS: | cleaning space | a: | first angle |
| b: | second angle | | |

## Claims

1. A filter structure, comprising:
a plurality of membranes configured to selectively pass raw water through to produce purified water;
a spacer disposed between the plurality of membranes configured to form a space through which the purified water flows;
a tube configured to be connected to the space and the outside to form a flow path through which the purified water flows out, the plurality of membranes and the spacer being wound around the tube; and
a seal assembly configured to extend along an outer perimeter of the plurality of membranes and seal the space in the outer circumferential direction, the seal assembly having a hardness different from that of the plurality of membranes,
wherein the plurality of membranes wound around the tube member are arranged at least partially spaced apart along the radial direction.

2. The filter structure of claim 1,
wherein the height of the plurality of membranes is same as that of the tube in the longitudinal direction, and
wherein the distance between portions arranged overlapping in the radial direction among the portions of the plurality of membranes wound around the tube has at least two or more values different from each other in the height direction.

3. The filter structure of claim 1,
wherein the hardness of the plurality of membranes is less than or equal to that of the seal assembly, and
wherein the distance in the radial direction between outer perimeters of the plurality of membranes wound around the tube is greater than or equal to that of the remaining portions of the plurality of membranes.

4. The filter structure of claim 1, wherein a cleaning space in which cleaning water configured to remove foreign substances remaining on the surface of the membrane flows in the longitudinal direction of the tube is formed between the plurality of membranes wound around the tube.

5. The filter structure of claim 4, wherein the length of the cleaning space in the radial direction has at least two values different from each other in the longitudinal direction of the tube.

6. The filter structure of claim 1, wherein the seal assembly is formed by thermal staking outer perimeters of the plurality of membranes.

7. The filter structure of claim 1, wherein the seal assembly is formed by being bonded by polyurethane sealant.

8. The filter structure of claim 1, further comprising:
a coupler configured to be positioned between the plurality of membranes and support the tube to couple the tube with the plurality of membranes.

9. The filter structure of claim 8, wherein the cross-section of the coupler is configured to decrease as the coupler moves away from the tube along the outer perimeter of the plurality of membranes.

10. The filter structure of claim 8, wherein the cross-section of the coupler is configured to extend in the outer circumferential direction of the membranes, and wherein an angle between a pair of sides facing away in the thickness direction of the membrane includes an acute angle.

11. The filter structure of claim 8, wherein the cross-section of the coupler is formed such that an angle of one pair of edges spaced apart from each other in the outer circumferential direction of the membrane is less than or equal to that in the thickness direction of the membrane.

12. The filter structure of claim 1,
wherein a plurality of said spacers are provided, and the plurality of spacers are positioned between the plurality of membranes, and
wherein the filter structure further comprises an adapter configured to be coupled to the membrane, the spacer, and the tube, respectively, to be configured to connect the tube to the space between the plurality of spacers.

13. The filter structure of claim 12,
wherein the adapter comprises:
an adapter body configured to penetrate the membrane and the spacer and be coupled to the tube; and
an adapter base configured to be coupled to the adapter body and be positioned in the space to support the adapter body,
wherein the adapter base has a larger cross-section than the adapter body.

14. The filter structure of claim 13,
wherein the tube comprises:
a tube body configured to extend in one direction and have a tube hollow inside that communicates with the space; and
a tube opening configured to be formed through the outer surface of the tube body and connect the adapter body and the tube hollow.

15. The filter structure of claim 12,
wherein the tube extends in one direction, and
wherein a plurality of said adapters are provided, and the plurality of adapters are disposed to be spaced apart from each other along the extension direction of the tube.
